# FASCICULE DE BREVET EUROPEEN

(11) **EP 3 743 254 B1**
(45) Date de publication et mention de la délivrance du brevet: **19.10.2022**
(21) Numéro de dépôt: 19700965.7
(22) Date de dépôt: 24.01.2019
(51) Int. Cl.: B28B 7/00, B28B 7/36

(54) **FEUILLE POUR APPLIQUER UN MOTIF PRÉDÉFINI EN SURFACE D'UN ÉLÉMENT EN BÉTON LORS DE SA FABRICATION, SYSTÈME ET MÉTHODE UTILISANT CETTE FEUILLE POUR LA FABRICATION D'UN ÉLÉMENT EN BÉTON**
FOLIE ZUM AUFBRINGEN EINES VORGEGEBENEN MUSTERS AUF DIE OBERFLÄCHE EINES BETONELEMENTS WÄHREND DER HERSTELLUNG DESSELBEN, SYSTEM UND VERFAHREN UNTER VERWENDUNG DIESER FOLIE ZUR HERSTELLUNG EINES BETONELEMENTS
SHEET FOR APPLYING A PREDEFINED PATTERN TO THE SURFACE OF A CONCRETE ELEMENT DURING THE PRODUCTION OF SAME, SYSTEM AND METHOD USING SAID SHEET FOR PRODUCING A CONCRETE ELEMENT

(30) Priorité: 24.01.2018 FR 1850554
(43) Date de publication de la demande: 02.12.2020
(73) Titulaire: pro-T-co, 42000 Saint-Etienne (FR)
(72) Inventeur: GUICHARD, Jérémy, 42480 LA FOUILLOUSE (FR); PERRIN, Maxime, 42000 SAINT-ETIENNE (FR)
(74) Mandataire: Lavoix
(86) Numéro de dépôt international: PCT/EP2019/051737
(87) Numéro de publication internationale: WO 2019/145412

(56) Documents cités:
- WO-A1-2016/059193
- DE-A1-102014 119 121
- GB-A- 460 980

## Description

L'invention concerne une feuille pour appliquer un motif en surface d'un élément en béton lors de la fabrication de cet élément. L'invention concerne également un système et une méthode pour fabriquer un élément en béton.

Dans le domaine de l'architecture et de la construction de bâtiments, il est connu d'utiliser du béton désactivé pour réaliser un motif graphique sur une surface d'un élément en béton lors de la construction de cet élément par moulage ou par coffrage. Pour ce faire, un traitement de surface spécifique est mis en œuvre lors de la fabrication de l'élément après la coulée du béton.

Par exemple, on applique localement, sur la surface à décorer, un produit chimique tel qu'un agent retardateur de prise du béton ou un agent durcisseur du béton. Puis on laisse durcir le béton. Les zones sur lesquelles le produit chimique a été appliqué sèchent plus ou moins vite que les zones sur lesquelles le produit chimique n'a pas été appliqué. Ensuite, au bout d'un certain délai, on nettoie la surface avec un jet d'eau à haute pression pour enlever le liant du béton au niveau des zones où le béton n'a pas fini de sécher. La texture du béton est alors différente dans ces zones par rapport au reste de la surface, ce qui donne un aspect visuel spécifique à ces zones, qui contraste avec le reste de la surface. La surface du béton présente alors un motif graphique particulier.

Toutefois, cette solution connue ne donne pas entièrement satisfaction et présente certains inconvénients. En particulier, les produits chimiques utilisés sont coûteux. Leur utilisation nécessite certaines précautions, notamment pour assurer la sécurité des opérateurs en charge de leur application. Ces produits peuvent également être néfastes pour l'environnement et doivent ainsi être recyclés après leur utilisation. De surcroît, l'étape de nettoyage de la surface au jet d'eau génère un volume important d'eau sale et polluée qu'il convient de collecter et de recycler. Enfin, l'application des produits chimiques sur la surface est délicate à mettre en œuvre. Elle demande beaucoup de dextérité et se révèle mal aisée lorsque l'on souhaite réaliser un motif détaillé avec une finesse importante, ou encore lorsque la surface à décorer du béton est difficile d'accès, comme c'est le cas dans un panneau mural présentant une hauteur importante.

Il existe donc un besoin pour un dispositif et pour un procédé qui permettent de décorer une surface d'un élément en béton lors de sa fabrication, en remédiant aux inconvénients précités.

Le document DE 10 2014 119121 A1 divulgue une feuille pour appliquer un motif en surface d'un élément en béton lors de sa fabrication suivant le préambule de la revendication 1.

Ainsi, l'invention concerne une feuille pour appliquer un motif en surface d'un élément en béton lors de sa fabrication, telle que définie par la revendication 1.

Selon des aspects avantageux mais non obligatoires de l'invention, une telle feuille peut incorporer une ou plusieurs des caractéristiques suivantes, prises isolément ou suivant toute combinaison techniquement admissible :
- Le matériau polymère de la couche principale est du polypropylène, ou du polyamide, ou du polyéthylène, ou du polystyrène, ou un bio polymère tel qu'un bio plastique.
- L'épaisseur de la couche principale est comprise entre 100 µm et 2 mm, de préférence comprise entre 400 µm et 1 mm.
- La couche de fixation comporte un adhésif pour être fixé par collage à la surface de support, ou la couche de fixation comporte un matériau magnétique pour être fixé par aimantation sur la surface de support.

Selon un autre aspect, l'invention concerne un système pour la fabrication d'un élément en béton par moulage, ce système comportant :
- un moule comprenant des parois latérales et une paroi de fond qui délimitent ensemble un volume de réception de béton liquide ;
- une feuille telle que décrite précédemment, cette feuille étant fixée sur la paroi de fond grâce à sa couche de fixation avec sa face de contact tournée vers le volume de réception.

Selon encore un autre aspect, l'invention concerne un système pour la fabrication d'un élément en béton par coffrage, ce système comportant :
- une installation de coffrage comportant des banches chacune pourvue d'une surface de coffrage et qui délimitent un volume de réception du béton ;
- au moins une feuille telle que décrite précédemment, chaque feuille étant fixée à une surface de coffrage par l'intermédiaire de sa couche de fixation avec sa face de contact étant tournée vers le volume de réception.

Enfin, l'invention concerne également une méthode pour décorer une surface d'une pièce de béton avec un motif graphique, cette méthode comportant :
- l'installation d'une feuille de protection selon l'invention sur au moins une surface de support d'un système délimitant un volume de réception de béton liquide pour fabriquer un élément en béton par moulage ou par coffrage, la feuille de protection comportant le motif graphique prédéfini ;
- le remplissage du volume de réception avec du béton liquide de sorte que la face de contact et les structures tridimensionnelles de la feuille soient en contact avec le béton liquide ;
- le séchage du béton dans le volume de réception au contact de la feuille puis, une fois le béton sec, on sépare la feuille de l'élément en béton formé par le béton séché.

L'invention sera mieux comprise et d'autres avantages de celle-ci apparaîtront plus clairement à la lumière de la description qui va suivre, d'un mode de réalisation d'une feuille donnée uniquement à titre d'exemple et faite en référence aux dessins annexés dans lesquels :
- les figures 1 et 2 représentent schématiquement un système pour la fabrication d'un élément en béton par coffrage utilisant une feuille selon l'invention ;
- les figures 3 et 4 représentent schématiquement, selon des vues en coupe transversale, deux modes de réalisation d'une feuille conforme à l'invention ;
- la figure 5 représente un système pour la fabrication d'un élément en béton par moulage utilisant une feuille selon l'invention.

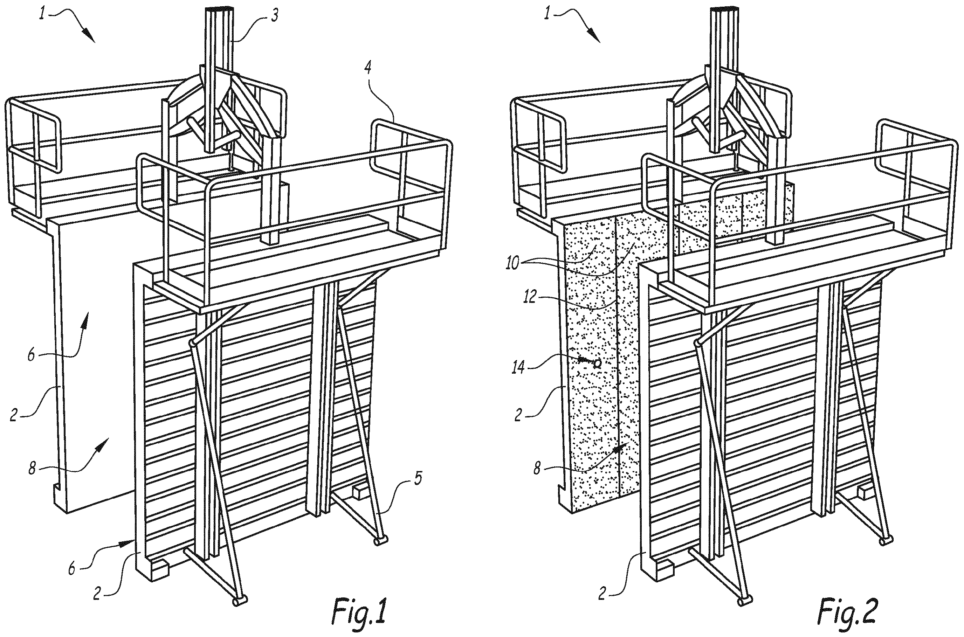

Les figures 1 et 2 représentent un exemple d'un système pour la fabrication d'un élément en béton par coffrage.

De façon générale, dans cette description, les éléments en béton peuvent être des éléments de construction tels que murs ou des portions de mur, des parois, des poutres, des panneaux, des dalles destinées à être utilisées sur un sol, sur un plafond ou sur un mur. Les éléments en béton peuvent également être des objets décoratifs tels que des plaques, des stèles, des pierres tombales, des plats ou des récipients, des présentoirs ou encore des presse-papiers ou des cendriers. De nombreuses autres applications sont possibles.

Ce système comporte une installation de coffrage 1 qui comprend au moins deux banches 2, également appelées « panneaux coffrants », disposées en regard face à face l'une avec l'autre. L'installation 1 comporte également un portique de manutention 3, des barrières de protection 4 et des contre-fiches de soutien 5.

Chaque banche 2 comporte une surface de coffrage 6. Les surfaces de coffrage 6 des banches 2 du système sont disposées les unes par rapport aux autres de manière à délimiter un volume 8 de réception du béton.

Pour former un élément en béton au moyen de l'installation 1, du béton liquide est coulé dans le volume de réception 8. Les banches 2 sont maintenues en place le temps que le béton coulé sèche. Une fois que le béton est sec, l'installation 1 est démontée, de manière à libérer l'élément ainsi construit.

Le portique 3 permet de stabiliser les banches 2 lors du coffrage et de permettre leur levage en vis-à-vis lors du décoffrage. Les barrières 4 sont disposées en partie supérieure des banches 2, afin d'éviter la chute accidentelle d'un opérateur travaillant sur l'installation 1. Les contre-fiches 5 sont disposées sur l'arrière des banches 2 pour rigidifier l'ensemble de l'installation 1, notamment lors de la coulée du béton dans le volume de réception 8. L'installation 1 peut comporter d'autres éléments, qui ne sont pas représentés dans un but de simplification.

Au moins l'une des surfaces 6 est au moins partiellement recouverte par une feuille 10 conforme à l'invention, comme illustré sur la figure 2. Chaque feuille 10 est fixée solidairement à une surface 6, comme expliqué dans ce qui suit.

Les feuilles 10 permettent de décorer une surface de l'élément en béton fabriqué au moyen de l'installation 1 avec un motif graphique prédéfini, comme expliqué plus en détail dans ce qui suit.

Selon des variantes, en fonction des dimensions des feuilles 10 et des surfaces de coffrage 6, plusieurs feuilles 10 peuvent être associées à une même surface 6. Par exemple, dans l'exemple illustré sur la figure 2, quatre feuilles 10 sont disposées verticalement côte à côte, de manière à recouvrir toute la surface 6, en étant alignées bord à bord au niveau de jonctions 12. D'autres dispositions sont possibles.

Optionnellement, les feuilles 10 peuvent être munies d'un orifice traversant 14 permettant le passage d'un organe mécanique de fixation qui aide à solidariser la feuille 10 sur la surface 6. Toutefois, les orifices 14 peuvent être omis.

La feuille 10 présente une forme essentiellement plane. De préférence, la forme de la feuille 10 est adaptée en fonction de la forme de la surface de support sur laquelle elle est destinée à être fixée.

Dans cet exemple, les surfaces 6 présentent une forme de quadrilatère, par exemple une forme de rectangle, délimité par un bord supérieur, un bord inférieur, un bord gauche et un bord droit. Chaque feuille 10 présente donc avantageusement une forme de rectangle, dont les dimensions et/ou dont le facteur de forme sont choisis en fonction de la forme de la surface 6.

Toutefois, en pratique, si la surface 6 présente une forme différente de celle d'un quadrilatère, la feuille 10 peut être adaptée en conséquence, par exemple en la découpant à la forme désirée. Le découpage peut être réalisé au moyen d'un massicot, d'un outil de découpe numérique ou à la main à l'aide d'un cutter.

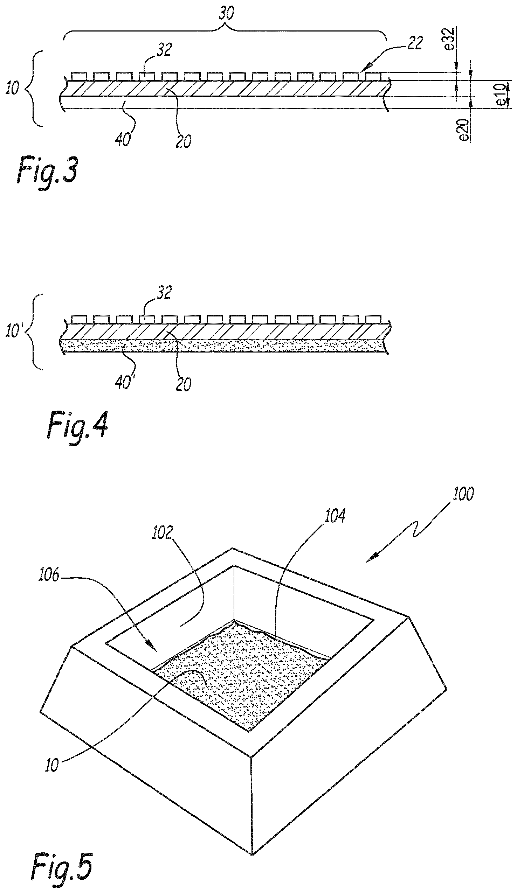

Comme illustré à la figure 3, la feuille 10 comporte une couche principale 20 de forme plane, dont une face principale 22 est destinée à venir en contact avec le béton lorsque la feuille 10 est utilisée au sein de l'installation 1. Dans ce qui suit, la face 22 est dite former une « face de contact » de la feuille 10.

La feuille 10 comporte également une couche de fixation 40, dont le rôle est de solidariser fixement la feuille 10 sur la surface de support, en l'occurrence ici sur la surface 6. En particulier, la feuille 10 ne doit pas de détacher accidentellement de la surface 6 lors de la coulée de béton dans le volume de réception 8.

La couche de fixation 40 est solidarisée à la couche 20. Plus précisément, la couche 40 est formée sur la face arrière de la couche 20, c'est-à-dire sur la face principale de la couche 20 qui se trouve à l'opposé de la face de contact 22.

Dans cet exemple, la couche de fixation 40 comporte un matériau adhésif de manière à permettre à la feuille 10 d'être fixée par collage à la surface de support. La face arrière de la couche 40, c'est-à-dire la face opposée à la face tournée vers la couche 20, peut avantageusement être protégée par un film de protection amovible. Ce film est destiné à n'être retiré qu'au moment de fixer la feuille 10 sur la surface 6, de manière à protéger le matériau adhésif.

La face 22 est texturée, c'est-à-dire qu'elle comporte une pluralité de structures 32 tridimensionnelles faisant saillie par rapport à la couche principale 20. Les structures tridimensionnelles 32 font partie de la feuille 10.

Les structures 32 sont de préférence rigides, pour ne pas se déformer ni s'aplatir lorsqu'elles sont mises en contact avec le béton liquide ou, ensuite, lors du séchage du béton avec lequel elles sont en contact.

Les structures 32 sont réparties spatialement sur au moins une partie de la face 22 de manière à former un motif graphique 30 en relief sur la face 22.

Lorsque le béton liquide est versé dans le volume de réception 8, le béton qui se trouve au contact de chaque feuille 10 épouse le contour de la face 22 et des structures tridimensionnelles 32 de cette feuille. Lorsque le béton sèche, la surface du volume de béton qui est en contact avec la face 22 et les structures 32 prend et conserve une forme complémentaire à la forme en relief de la face 22 et des structures 32. On comprend donc que le motif 30 porté par la feuille 10 est imprimé en négatif sur la surface à décorer de l'élément en béton.

Les références « e10 », « e20 » et « e32 » désignent respectivement l'épaisseur de la feuille 10, de la couche principale 20 et l'épaisseur maximale, ou hauteur, d'une structure 32. Par exemple, l'épaisseur e10 est définie égale à la somme de l'épaisseur e20 et de l'épaisseur de la couche 40. De préférence, l'épaisseur e20 est comprise entre 100µm et 2mm, et plus préférentiellement est comprise entre 400µm et 1mm.

Les structures tridimensionnelles 32 présentent une hauteur e32 inférieure ou égale à 500µm, de préférence inférieure ou égale à 100µm et, de préférence encore inférieure ou égale à 10µm. Les structures 32 ne sont pas nécessairement identiques les unes aux autres et peuvent différer tant dans leur taille, leur hauteur que leur position relative sur la surface 22. La hauteur e32 est ici mesurée par rapport à la face 22 perpendiculairement à celle-ci.

La couche principale 20 est réalisée en un matériau polymère. Par exemple, ce matériau polymère comporte du polypropylène, ou du polyamide, ou du polyéthylène ou du polystyrène. En variante, il peut s'agir d'un bio polymère, tel qu'un bioplastique.

La couche principale 20 est de préférence souple.

Par exemple, la feuille 10 peut être fournie sous la forme d'un rouleau, ce qui facilite son stockage, son transport, sa manutention, ce rouleau étant ensuite partiellement déroulé pour obtenir une feuille 10 de dimensions souhaitées.

Selon certains modes de mise en œuvre, la couche 20 peut être formée par la superposition de plusieurs sous-couches, par exemple assemblées par co-extrudation. La couche 20 peut ainsi, par exemple, présenter une structure analogue à celle de la feuille de protection décrite dans la demande WO 2016/059193 A1.

Préférentiellement, la face principale 22 présente des propriétés hydrophobes. Selon une possibilité, des propriétés hydrophobes proviennent de propriétés intrinsèquement hydrophobes du matériau utilisé pour former la couche principale 20.

En variante, un agent chimique hydrophobe est appliqué sur la face 22 préalablement à l'utilisation de la feuille 10. Par exemple, cet agent chimique est appliqué lors de la fabrication de la feuille 10. En variante, l'agent chimique peut être appliqué postérieurement à la fabrication de la feuille 10, par exemple lors de l'utilisation et de l'installation de la feuille 10 au sein de l'installation 1.

Les propriétés hydrophobes de la face 22 facilitent le retrait de la feuille une fois que le béton a durci, sans qu'il ne soit besoin d'ajouter des additifs chimiques additionnels tels que des huiles ou des lubrifiants.

Selon l'invention, les structures tridimensionnelles 32 sont réalisées en résine ou en vernis déposée sur la couche 20, notamment une résine ou un vernis photodurcissant par ultra-violets. Par exemple, on utilise des résines à base de copolymères d'acrylate ou de méthacrylate et/ou à base de terpolymères contenant des groupes polaires. D'autres formulations peuvent être utilisées. On peut également utiliser un photopolymère durcissant aux ultra-violets, pouvant être additionné d'un photoamorceur.

Ce dépôt de résine ou de vernis est par exemple réalisé au moyen d'un dispositif d'impression spécialisé, tel qu'une imprimante numérique. Par exemple, la couche 20, éventuellement déjà solidarisée avec la couche 40, est placée dans une zone de travail de l'imprimante. De la résine est déposée, par une tête d'impression de l'imprimante, en quantités prédéfinies à des emplacements prédéfinis de la face 22, pour former les structures 32 et ainsi obtenir le motif 30. Pendant ce dépôt, la tête d'impression est commandée et déplacée automatiquement en fonction d'une trajectoire prédéfinie calculée en fonction du motif 30 devant être dessiné. Par exemple, la trajectoire st générée automatiquement, au moyen d'un calculateur électronique, à partir d'une image numérique matricielle du motif à appliquer sur l'élément de béton ou d'un négatif de cette image, ou encore à partir d'un motif défini par une image vectorielle. Une fois la résine déposée, elle est exposée à un rayonnement de lumière ultraviolette émise par une source lumineuse.

Selon d'autres modes de mise en œuvre ne faisant pas partie de l'invention, les structures tridimensionnelles 32 sont formées d'un seul tenant avec la couche principale 20.

Ainsi, selon un premier exemple, la couche 20 et les structures 32 sont fabriquées au moyen d'un procédé de fabrication additive, aussi nommé procédé d'impression en trois dimensions.

Selon un deuxième exemple ne faisant pas partie de l'invention, les structures 32 sont fabriquées en déformant sélectivement la couche principale 20, par exemple au moyen d'un procédé de calandrage. Par exemple, la couche 20 est insérée dans un dispositif comprenant deux rouleaux qui permettent d'impartir un motif régulier prédéterminé sur la surface de la couche 20. De fait, la couche 20 présente alors les portions en saillie qui forment alors les structures tridimensionnelles 32. Ce procédé de calandrage est particulièrement avantageux lorsque l'on souhaite obtenir un motif graphique 30 simple et répété régulièrement sur toute la surface de la feuille 10, tel qu'un motif imitant la texture d'un matériau naturel comme la pierre ou le bois.

Suivant l'invention, la rugosité de surface des structures tridimensionnelles 32 formant le motif 30 est différente de la rugosité de surface du reste de la face de contact 22 de la couche principale 20.

Par exemple, la rugosité d'au moins une partie des structures 32 est supérieure à celle de la face 22. D'autres variantes sont possibles, par exemple en prévoyant une rugosité plus élevée pour le reste de la face 22 que pour les structures 32.

Ces différences de rugosité de surface se traduisent par un aspect visuel différent qui peut ainsi être soit mat soit brillant selon que la rugosité de surface est plus ou moins élevée. Ainsi, les structures 32 présentent un aspect brillant tandis que le reste de la face 22 présente un aspect mat. Au contraire, les structures 32 présentent un aspect mat alors que le reste de la face 22 présente un aspect brillant. On peut également, en variante, avoir certaines des structures 32 qui sont plus mates ou, au contraire, plus brillantes que le reste des structures 32 et/ou que le reste de la face 22.

Cet aspect mat ou brillant permet de donner localement un aspect mat ou brillant sur certaines portions du motif qui sera imprimé sur la surface à décorer de l'élément en béton ainsi fabriqué.

Plus précisément, lorsque le béton, une fois coulé est au contact de la feuille 10, chaque portion de surface de ce volume de béton qui se trouve plus particulièrement en contact avec une zone mate de la feuille 10 lors de son durcissement, va présenter localement une porosité élevée due à une reproduction très précise de l'aspect du coffrage par le béton lors du séchage. Au contraire, lorsque ce béton est en contact avec une zone brillante, c'est-à-dire présentant une faible rugosité de surface, alors il présentera à l'issue de son séchage une porosité moindre. Cette différence de porosité locale sur la surface de béton donne un aspect visuel différent. En d'autres termes, l'application d'une zone brillante ou d'une zone mate grâce à la feuille 10 sur la surface du béton en cours de séchage permet de donner localement un aspect brillant ou mat, respectivement, à la surface du béton.

La figure 4 représente une feuille 10' selon un autre mode de réalisation de la feuille 10. Dans l'exemple illustré, la feuille 10' diffère de la feuille 10 précédemment décrite en ce que la couche de fixation 40 adhésive est remplacée par une couche de fixation 40' magnétique qui joue le même rôle mais qui, au lieu de permettre une fixation de la feuille par collage, est destinée à être fixée par aimantation sur la surface de support. A cet effet, la couche de fixation 40' comporte un matériau magnétique, notamment ferromagnétique, ou un aimant permanent.

A titre d'exemple, la couche de fixation 40' comporte une matrice de caoutchouc dans laquelle sont insérées des particules métalliques magnétiques, telles que des particules de ferrite aimantées. Par exemple, cette couche 40' est synthétisée à partir d'un mélange comportant une poudre de caoutchouc, un matériau polymère et les particules magnétiques, ce mélange étant ensuite vulcanisé pour obtenir la couche 40'.

Selon un exemple de mise en œuvre, la couche 20 est ensuite formée sur la couche 40', par exemple en déposant un vernis polymère. Dans ce cas précis, qui ne fait pas partie de l'invention, la couche 20 et les structures 32 sont réalisées d'un seul tenant dans ce matériau polymère.

Selon un autre exemple de mise en œuvre, non illustré, la couche 40' est fixée sur la face arrière de la couche 20 au moyen d'une couche adhésive intermédiaire. Par exemple, on colle la couche 40' à l'arrière d'une feuille 10 pour former la feuille 10'.

La couche 40' peut aussi être fixée à la feuille 20 par soudage, notamment par soudage au moyen d'ultrasons.

La fixation magnétique de la couche 10' est particulièrement avantageuse dans le cas où la surface de support est métallique, comme cela est fréquemment le cas dans des installations 1 de coffrage. D'autres utilisations sont toutefois possibles. La fixation magnétique est avantageuse par rapport à la fixation par collage, en ce qu'elle permet de fixer puis d'enlever la feuille 10' un grand nombre de fois de la surface de support sans endommager la feuille 10'. En d'autres termes, la feuille 10' est plus facilement réutilisable que la feuille 10. Cela facilite également la pose de la feuille 10', qui ne craint pas d'être détachée de la surface 6 pour être repositionnée, par exemple après avoir été accidentellement posée de travers, ceci au contraire de la feuille 10 où tout décollage répété est susceptible de l'endommager.

Mis à part cette différence, tout ce qui est décrit ci-dessus en référence à la feuille 10 s'applique à la feuille 10'.

Selon des variantes non illustrées et ne faisant pas partie de l'invention, la couche de fixation 40' peut être utilisée dans une feuille de protection d'une surface de coffrage analogue à la feuille 10 mais dans laquelle les structures 32 sont omises.

Un exemple d'utilisation de la feuille 10 est maintenant décrit pour décorer une surface d'un élément de béton avec un motif prédéfini. Cette méthode est également applicable à la feuille 10', pour autant que la surface 6 permette la fixation de la feuille 10' par aimantation.

D'abord, on installe une feuille 10 selon l'invention sur au moins une face d'une structure délimitant un volume de réception de béton liquide. Par exemple, on installe une ou plusieurs feuilles 10 sur au moins une surface de coffrage 6. La feuille 10' installée comporte le motif prédéfini, en négatif, du motif avec lequel on souhaite décorer la surface de l'élément de béton.

Ensuite, on dépose du béton liquide dans le volume de réception 8 de sorte que la face de contact 22 et les structures 32 de la feuille 10 soient en contact avec le béton liquide. Puis on laisse sécher le béton dans le volume 8 au contact de la feuille 10.

Une fois que le béton est sec, on sépare le béton de la feuille 10, par exemple en retirant les banches 2 de l'installation de coffrage 1, de sorte à libérer l'élément de béton ainsi construit. Le motif graphique désiré est alors formé sur la portion de surface du volume de béton qui était en contact avec la feuille 10 pendant le séchage du béton.

De façon avantageuse, la feuille 10 est réutilisable, c'est-à-dire qu'après avoir été séparée du béton, elle peut être réutilisée à nouveau pour appliquer le motif sur un autre élément en béton. Cette réutilisabilité est notamment due aux choix des matériaux formant la feuille 10 ainsi qu'aux propriétés hydrophobes de la face 22.

La figure 5 représente un système pour la fabrication d'un élément en béton par moulage. Ce système comporte un moule 100 comprenant des parois latérales 102 et une paroi de fond 104 qui délimite un volume de réception de béton liquide 6. Un tel moule 100 est, de préférence, réalisé en matière plastique thermoformée, ce qui présente un coût moindre. Un tel moule 100 permet de fabriquer des éléments en béton présentant une taille moindre que ceux fabriqués au moyen de l'installation de coffrage 1, et avec une cadence de fabrication plus importante.

Pour fabriquer un élément en béton à l'aide du moule 100, on verse du béton liquide dans le volume de réception 106 et on laisse sécher le béton. A l'issue du séchage, l'élément en béton ainsi formé est retiré hors du moule 100.

Le système comporte ici une feuille 10 ou une feuille 10' fixée sur la paroi de fond 104. La paroi 104 joue donc ici le rôle de surface de support. Plus précisément, la feuille 10 ou 10' est fixée à la paroi de fond 104 au moyen de la couche de fixation 40, 40'. La face de contact 22 est tournée vers le volume de réception 106 de manière à être en contact avec le béton lorsque celui-ci est versé dans le volume 106.

Dans cet exemple, le volume de réception 106 illustré présente une forme de pavé à base rectangulaire. Toutefois, d'autres formes sont possibles. La forme de la feuille 10 ou de la feuille 10' s'en trouve alors adaptée en conséquence.

Comme la feuille 10 est amovible, il est possible de changer le motif devant être appliqué sur l'élément en béton en la remplaçant par une autre feuille 10, sans avoir besoin de modifier la forme du moule 100.

La méthode précédemment décrite pour décorer une surface d'un élément de béton avec un motif prédéfini est également applicable avec un moule 100 équipé d'au moins une feuille 10 ou 10'.

Selon des variantes, la feuille 10' n'est pas nécessairement plane. Elle peut recouvrir au moins en partie les parois latérales 102 du moule 100 en plus de recouvrir la paroi de fond 104.

Par exemple, la feuille 10' présente une forme complémentaire à la forme des parois 102 et 104 délimitant le volume de réception 106. La feuille 10' joue alors le rôle de surmoule amovible, destiné à être inséré dans le moule 100 avant la coulée du béton.

Le démoulage de l'élément en béton peut alors intervenir en deux temps : d'abord on retire hors du moule 100 la feuille 10' formant surmoule et contenant toujours l'élément en béton, puis on sépare l'élément en béton de la feuille 10'. Ces deux étapes peuvent être dissociées dans le temps.

Par exemple, une fois que le béton a commencé à sécher et possède une rigidité permettant son maniement, alors le surmoule 10' et l'élément en béton sont sortis du moule 100, même si le béton n'est pas encore complètement sec. L'élément en béton est ensuite, dans un second temps, sorti du surmoule formé par la feuille 10' uniquement lorsque le béton a complètement fini de durcir.

En utilisant la feuille 10' en tant que surmoule, on évite d'immobiliser le moule 100 trop longtemps, sans pour autant forcer un démoulage précoce de l'élément en béton.

Cela permet d'utiliser la cadence de production lorsque le moule 100 est utilisé dans une ligne de production industrielle. La feuille 10' peut ainsi rester plus longtemps au contact de l'élément en béton. Par exemple, elle peut protéger l'élément en béton tout au long de son transport jusqu'au client final, à la manière d'un emballage.

Les modes de réalisation et les variantes envisagés ci-dessus peuvent être combinés entre eux pour générer de nouveaux modes de réalisation tout en restant dans l'étendue de protection définie par les revendications annexées.

## Revendications

1. Feuille pour appliquer un motif en surface d'un élément en béton lors de sa fabrication, cette feuille (10, 10') comportant :
- une couche principale (20) en matériau polymère dont une face, dite face de contact (22), est destinée à venir en contact avec une surface d'un volume de béton liquide lors d'une opération de fabrication d'un élément en béton par coffrage ou moulage, la face principale (22) présentant des propriétés hydrophobes ;
- une couche de fixation (40, 40') pour solidariser la feuille (10, 10') à une surface de support (6, 104), la couche de fixation étant attachée à une face de la couche principale (20) opposée à la face de contact (22) ;
- la face de contact (22) étant texturée et comportant à cet effet une pluralité de structures tridimensionnelles (32) faisant saillie par rapport à la couche principale (20) et formant en relief un motif graphique prédéfini (30) destiné à être imprimé sur la surface de l'élément en béton ;
**caractérisée en ce que** les structures tridimensionnelles (32) sont réalisées en résine ou en vernis déposé sur la face de contact (22) de la couche principale (20) ;
et **en ce que** la rugosité de surface des structures tridimensionnelles (32) formant le motif (30) est différente de la rugosité de surface du reste de la face de contact (22) de la couche principale (20).

2. Feuille selon la revendication 1, **caractérisée en ce que** le matériau polymère de la couche principale (20) est du polypropylène, ou du polyamide, ou du polyéthylène, ou du polystyrène, ou un bio polymère tel qu'un bio plastique.

3. Feuille selon la revendication 1 ou 2, **caractérisée en ce que** l'épaisseur (e20) de la couche principale (20) est comprise entre 100 µm et 2 mm, de préférence comprise entre 400 µm et 1 mm.

4. Feuille selon l'une quelconque des revendications 1 à 3, **caractérisée en ce que** la couche de fixation (40) comporte un adhésif pour être fixé par collage à la surface de support (6, 104), ou **en ce que** la couche de fixation (40') comporte un matériau magnétique pour être fixé par aimantation sur la surface de support (6, 104).

5. Feuille selon l'une quelconque des revendications 1 à 4, **caractérisée en ce que** les structures tridimensionnelles (32) sont réalisées en une résine ou un vernis photodurcissant par ultra-violets, par exemple à base de copolymères d'acrylate ou de méthacrylate et/ou à base de terpolymères contenant des groupes polaires, ou un photopolymère durcissant aux ultra-violets, pouvant être additionné d'un photoamorceur.

6. Système pour la fabrication d'un élément en béton par moulage comportant:
- un moule comprenant des parois latérales (102) et une paroi de fond (104) qui délimitent ensemble un volume de réception (106) de béton liquide ;
- une feuille (10, 10') selon l'une quelconque des revendications précédentes, cette feuille étant fixée sur la paroi de fond grâce à sa couche de fixation (40, 40') avec sa face de contact (22) tournée vers le volume de réception (106).

7. Système pour la fabrication d'un élément en béton par coffrage comportant:
- une installation (1) de coffrage comportant des banches (2) chacune pourvue d'une surface de coffrage (6) et qui délimitent un volume de réception du béton (8) ;
- au moins une feuille (10, 10') selon l'une quelconque des revendications 1 à 5, chaque feuille étant fixée à une surface de coffrage par l'intermédiaire de sa couche de fixation avec sa face de contact étant tournée vers le volume de réception.

8. -Méthode pour décorer une surface d'une pièce de béton avec un motif graphique, **caractérisé en ce que** cette méthode comporte :
- l'installation d'une feuille de protection (10, 10') selon l'une quelconque des revendications 1 à 5 sur au moins une surface de support (8, 106) d'un système délimitant un volume de réception (8, 106) de béton liquide pour fabriquer un élément en béton par moulage ou par coffrage, la feuille de protection comportant le motif graphique (30) prédéfini ;
- le remplissage du volume de réception (8, 106) avec du béton liquide de sorte que la face de contact (22) et les structures tridimensionnelles (32) de la feuille (10, 10') soient en contact avec le béton liquide ;
- le séchage du béton dans le volume de réception (8, 106) au contact de la feuille (10, 10') puis, une fois le béton sec, on sépare la feuille (10, 10') de l'élément en béton formé par le béton séché.

## Patentansprüche

1. Folie zum Aufbringen eines Musters auf die Oberfläche eines Betonelements während der Herstellung desselben, wobei diese Folie (10, 10') Folgendes umfasst:
- eine Hauptschicht (20) aus Polymermaterial, von der eine Fläche, bezeichnet als Kontaktfläche (22), ausgelegt ist, um mit einer Oberfläche eines Volumens aus Flüssigbeton während eines Vorgangs der Herstellung eines Elements aus Beton durch Schalung oder Gießen in Kontakt zu kommen, wobei die Hauptseite (22) hydrophobe Eigenschaften aufweist;
- eine Befestigungsschicht (40, 40'), um die Folie (10, 10') mit einer Trägeroberfläche (6, 104) fest zu verbinden, wobei die Befestigungsschicht an eine Fläche der Hauptschicht (20) gegenüber der Kontaktfläche (22) befestigt ist;
- wobei die Kontaktfläche (22) texturiert ist und zu diesem Zweck eine Vielzahl von dreidimensionalen Strukturen (32) umfasst, die mit Bezug auf die Hauptschicht (20) hervorstehen und im Relief ein vorbestimmtes graphisches Motiv (30) bilden, das ausgelegt ist, um auf die Oberfläche eines Betonelements gedruckt zu werden,
**dadurch gekennzeichnet, dass** die dreidimensionalen Strukturen (32) aus Harz oder Lack hergestellt sind, der auf der Kontaktfläche (22) der Hauptschicht (20) abgelegt ist;
und dadurch, dass die Oberflächenrauigkeit der dreidimensionalen Strukturen (32), die das Motiv (30) bilden, verschieden von der Oberflächenrauigkeit der restlichen Kontaktfläche (22) der Hauptschicht (20) sind.

2. Folie nach Anspruch 1, **dadurch gekennzeichnet, dass** das Polymermaterial der Hauptschicht (20) aus Polypropylen oder aus Polyamid oder aus Polyethylen oder aus Polystyrol oder ein Biopolymer wie z. B. ein Biokunststoff ist.

3. Folie nach Anspruch 1 oder 2, **dadurch gekennzeichnet, dass** die Dicke (e20) der Hauptschicht (20) im Bereich zwischen 100 µm und 2 mm, vorzugsweise im Bereich zwischen 400 µm et 1 mm liegt.

4. Folie nach einem der Ansprüche 1 bis 3, **dadurch gekennzeichnet, dass** die Befestigungsschicht (40) einen Klebstoff umfasst, um durch Kleben an die Trägeroberfläche (6, 104) befestigt zu werden,
oder dadurch, dass die Befestigungsschicht (40') ein magnetisches Material umfasst, um durch Magnetisierung auf die Trägeroberfläche (6, 104) befestigt zu werden.

5. Folie nach einem der Ansprüche 1 bis 4, **dadurch gekennzeichnet, dass** die dreidimensionalen Strukturen (32) aus einem Harz oder durch UV-Strahlung aushärtbarem Lack, z. B. basierend auf Acrylat- oder Methacrylatcopolymeren und/oder basierend auf Terpolymeren, enthaltend polare Gruppen, oder einem Photopolymer, das durch UV-Strahlen aushärtet, das einem Photoinitiatior zugegeben werden kann, sind.

6. System zur Herstellung eines Betonelements durch Formen, umfassend:
- eine Form, umfassend seitliche Wände (102) und eine untere Wand (104), die zusammen ein Aufnahmevolumen (106) von flüssigem Beton begrenzen;
- eine Folie (10, 10') nach einem der vorhergehenden Ansprüche, wobei diese Folie auf die untere Wand dank ihrer Befestigungsschicht (40, 40') befestigt ist, wobei ihre Kontaktfläche (22) hin zum Aufnahmevolumen (106) gedreht ist.

7. System zur Herstellung eines Betonelements durch Schalen, umfassend:
- eine Schalungsanlage (1), umfassend Schalungselemente (2), die jeweils mit einer Schalungsoberfläche (6) versehen sind, und die ein Volumen zur Aufnahme des Betons (8) begrenzen;
- mindestens eine Folie (10, 10') nach einem der Ansprüche 1 bis 5, wobei jede Folie an eine Schalungsoberfläche mit Hilfe ihrer Befestigungsschicht befestigt ist, wobei ihre Kontaktfläche hin zum Aufnahmevolumen gedreht ist.

8. Verfahren zum Dekorieren einer Oberfläche eines Betonstücks mit einem graphischen Motiv, **dadurch gekennzeichnet, dass** das Verfahren Folgendes umfasst:
- Einbauen einer Schutzfolie (10, 10') nach einem der Ansprüche 1 bis 5 auf mindestens einer Trägeroberfläche (8, 106) eines Systems, das ein Aufnahmevolumen (8, 106) von flüssigem Beton begrenzt; um ein Betonelement durch Formen oder durch Schalen herzustellen, wobei die Schutzfolie das vordefinierte graphische Motiv (30) umfasst;
- Füllen des Aufnahmevolumens (8, 106) mit flüssigem Beton, so dass die Kontaktfläche (22) und die dreidimensionalen Strukturen (32) der Folie (10, 10') mit dem flüssigen Beton in Kontakt sind;
- Trocknen des Betons im Aufnahmevolumen (8, 106) in Kontakt mit der Folie (10, 10'), dann, nachdem der Beton trocken ist, wird die Folie (10, 10') vom Betonelement, gebildet aus dem getrockneten Beton, getrennt.

## Claims

1. A sheet for applying a pattern to the surface of a concrete element during the production thereof, this sheet (10, 10') comprising:
- a main layer (20) made of polymer material, one surface of which, called contact surface (22), is intended to come into contact with a surface of a volume of liquid concrete during an operation for manufacturing a concrete element by formwork or molding, the main surface (22) having hydrophobic properties;
- an attachment layer (40, 40') for securing the sheet (10, 10') to a support surface (6, 104), the attachment layer being attached to a surface of the main layer (20) opposite the contact surface (22);
- the contact surface (22) being textured and comprising for this purpose a plurality of three-dimensional structures (32) which protrude in relation to the main layer (22) and forming a predefined graphical pattern (30) in relief intended to be printed on the surface of the concrete element.
**characterized in that** the three-dimensional structures (32) are made from resin or varnish deposited on the contact surface (22) of the main layer (20), and **in that** the surface roughness of the three-dimensional structures (32) forming the pattern (30) is different from the surface roughness of the rest of the contact surface (22) of the main layer (20).

2. The sheet according to claim 1, **characterized in that** the polymer material of the main layer (20) is polypropylene, or polyamide, or polyethylene, or polystyrene, or a biopolymer such as a bioplastic.

3. The sheet according to any one of claims 1 or 2, **characterized in that** the thickness (e20) of the main layer (20) is between 100 µm and 2 mm, preferably between 400 µm and 1 mm.

4. The sheet according to any one of claims 1 to 3, **characterized in that** the attachment layer (40) comprises an adhesive to be attached by gluing to the support surface (6, 104),
or **in that** the attachment layer (40') comprises a magnetic material to be attached by magnetization on the support surface (6, 104).

5. The sheet according to any one of claims 1 to 4, **characterized in that** the three-dimensional structures (32) are made of an ultraviolet-curing resin or varnish, for example based on acrylate or methacrylate copolymers and/or based on terpolymers containing polar groups, or an ultraviolet-curing photopolymer, to which a photoinitiator agent can be added.

6. A system for producing a concrete element by molding, comprising:
- a mold comprising side walls (102) and a bottom wall (104) that together delimit a volume (106) for receiving liquid concrete;
- a sheet (10, 10') according to any one of the preceding claims, this sheet being attached on the bottom wall owing to its attachment layer (40, 40') with its contact surface (22) facing toward the receiving volume (106).

7. A system for producing a concrete element by formwork comprising:
- a formwork facility (1) comprising form panels (2) each provided with a formwork surface (6) and which delimit a receiving volume for the concrete (8);
- at least one sheet (10, 10') according to any one of claims 1 to 5, each sheet being attached to a formwork surface by means of its attachment layer with its contact surface facing toward the receiving volume.

8. A method for decorating a surface of a concrete part with a graphical pattern, **characterized in that** this method comprises:
- installing a protective sheet (10, 10') according to any one of claims 1 to 5 on at least one support surface (8, 106) of a system delimiting a volume (8, 106) for receiving liquid concrete for producing a concrete element by molding or by formwork, the protective sheet comprising the predefined graphical pattern (30);
- filling the receiving volume (8, 106) with liquid concrete such that the contact surface (22) and the three-dimensional graphical pattern structures (32) of the sheet (10, 10') are in contact with the liquid concrete;
- drying the concrete in the receiving volume (8, 106) in contact with the sheet (10, 10') then, once the concrete is dry, separating the sheet (10, 10') from the concrete element formed by the dried concrete.
